# EUROPÄISCHE PATENTSCHRIFT

(11) **EP 3 440 379 B1**
(45) Veröffentlichungstag und Bekanntmachung des Hinweises auf die Patenterteilung: **26.02.2020**
(21) Anmeldenummer: 17755531.5
(22) Anmeldetag: 24.08.2017
(51) Int. Cl.: F16F 13/10

(54) **HYDROLAGER**
HYDRAULIC BEARING
PALIER HYDRAULIQUE

(30) Priorität: 29.08.2016 DE 102016116079
(43) Veröffentlichungstag der Anmeldung: 13.02.2019
(73) Patentinhaber: Vibracoustic AG, 64293 Darmstadt (DE)
(72) Erfinder: BECKMANN, Wolfgang, 64289 Darmstadt (DE)
(74) Vertreter: Flügel Preissner Schober Seidel
(86) Internationale Anmeldenummer: PCT/EP2017/071354
(87) Internationale Veröffentlichungsnummer: WO 2018/041719

(56) Entgegenhaltungen:
- EP-A1- 0 565 860
- EP-A1- 1 176 336
- FR-A1- 2 313 223
- JP-A- H01 193 426

## Beschreibung

Die vorliegende Erfindung betrifft ein Hydrolager, insbesondere zur Lagerung eines Kraftfahrzeugmotors, mit einem Lagerkern, einer Tragfeder aus einem elastomeren Werkstoff, einer Arbeitskammer, die von der Tragfeder begrenzt ist, und einer Ausgleichskammer, die durch eine Zwischenplatte von der Arbeitskammer getrennt ist, wobei der Lagerkern ein erstes Lagerkernteil und ein zweites Lagerkernteil aufweist, die über einen Elastomerkörper zur hochfrequenten Schwingungsentkopplungen miteinander wirkverbunden sind, wobei der Elastomerkörper einen ersten Elastomerkörperabschnitt, der wenigstens eine auf den Lagerkern wirkende statische Lagerlast aufnimmt, und einen zweiten Elastomerkörperabschnitt aufweist, der wenigstens eine auf den Lagerkern wirkende Querkraft aufnimmt, wobei der erste Elastomerkörperabschnitt senkrecht zu einer Mittelachse des ersten Lagerkernteils und/oder einer Mittelachse des zweiten Lagerkernteils angeordnet ist und der zweite Elastomerkörperabschnitt längs der Mittelachse des ersten Lagerkernteils und/oder der Mittelachse des zweiten Lagerkernteils angeordnet ist.

Derartige hydraulisch dämpfende Lager werden insbesondere zur Abstützung eines Kraftfahrzeugmotors an einer Fahrzeugkarosserie verwendet, um einerseits die von Fahrbahnunebenheiten hervorgerufenen Schwingungen zu dämpfen und andererseits akustische Schwingungen zu isolieren. Die von Fahrbahnunebenheiten hervorgehobenen Schwingungen werden durch ein hydraulisches System gedämpft, wobei das hydraulische System durch die flüssigkeitsgedämpfte Arbeitskammer, die Ausgleichskammer und den die beiden Kammern miteinander verbindenden Dämpfungskanal gebildet wird. Die Funktionsweise des hydraulischen Systems kann wie folgt beschrieben werden. Die Arbeitskammer wird durch eine Bewegung der Tragfeder vergrößert oder verkleinert, wobei die in der Arbeitskammer befindliche Flüssigkeit über den Dämpfungskanal in die Ausgleichskammer gedrückt wird. Die im Dämpfungskanal schwingende Flüssigkeit bewirkt eine Dämpfung.

Hydrolager werden in Kraftfahrzeugen eingesetzt, um auftretende Schwingungen zu dämpfen und zu tilgen. Gerade im Bereich von hohen Frequenzen über 1000 Hz kann die dynamische Steifigkeit ungewollte Größenordnungen von über 2000 N/mm erreichen. Mit Hilfe eines geteilten Lagerkerns, bei dem ein Lagerkernteil durch mehrere Elastomerkörper gelagert ist, kann eine hochfrequente Schwingungsentkopplung erreicht werden und ungewollte hohe dynamische Steifigkeiten im hochfrequenten Bereich verhindert werden.

DE 103 30 056 A1 offenbart ein Hydrolager mit geteiltem Lagerkern, wobei die beiden Lagerkernteile durch eine hohlzylindrische elastische Wand miteinander verbunden sind, wodurch zwischen dem ersten und dem zweiten Lagerkernteil ein Hohlraum entsteht. Das zweite Lagerkernteil ist durch eine elastische Tragfeder gelagert, wodurch das zweite Lagerkernteil doppelt von der schwingenden Maschine isoliert ist. Damit kann die natürliche Resonanzfrequenz, die im Bereich von 1100 Hz bis 1700 Hz eine dynamische Steifigkeit bis hin zu 30000 N/mm aufweist, auf eine Resonanzfrequenz im Bereich von 400 bis 600 Hz mit einer maximalen dynamischen Steifigkeit von ungefähr 6000 N/mm gesenkt werden.

EP 0 136 700 B1 offenbart ein Hydrolager mit geteiltem Lagerkern. Die beiden Lagerkernteile sind durch einen ersten Elastomerkörper voneinander getrennt. Ein zweiter Elastomerkörper lagert das zweite Lagerkernteil auf dem Auflager. Das erste Lagerkernteil, das zweite Lagerkernteil sowie der erste Elastomerkörper und der zweite Elastomerkörper begrenzen mit einer Zwischenplatte eine Arbeitskammer. Nach oben hin weist die Arbeitskammer einen Ringspalt auf, der durch einen in die Arbeitskammer ragenden Vorsprung des ersten Lagerkernteils und den ersten Elastomerkörper gebildet ist. Durch die besondere Ausgestaltung des ersten Elastomerkörpers in senkrecht sowie waagerecht ausgebildete Komponenten ist die Radialsteifigkeit unabhängig von der Axialsteifigkeit des Hydrolagers einstellbar.

JP H01 193426 A offenbart ein Hydrolager mit einem Metalllager, welches mit einem Befestigungsstift verbunden ist. Weiter ist das Metalllager mit einem Elastomerköper verbunden, welcher zusammen mit dem Metalllager eine Arbeitskammer nach oben hin begrenzt. In den Elastomerkörper ist ein ringförmiges Metallverstärkungselement eingebracht.

Aus EP 0 565 860 A1 ist ein Hydrolager bekannt, das ein Lagerkernteil mit einer Lagerachse aufweist. Das Lagerkernteil ist mit einem gummielastischen Federelement verbunden, in das eine Stirnwand eingebracht ist.

EP 1 176 336 A1 offenbart ein Hydrolager, welches ein erstes Lagerkernteil und ein damit in Verbindung stehendes zweites Lagerkernteil umfasst, durch welche ein um die vertikale Achse geneigter Bolzen geführt wird. An dem ersten Lagerkernteil sind Elastomerkörper vorgesehen, wobei einer der Elastomerkörper die Form einer Wulst aufweist.

Der Erfindung liegt die Aufgabe zugrunde, ein Hydrolager zu schaffen, das eine verbesserte Herstellbarkeit, Dauerhaltbarkeit, hochfrequente Isolierung, sowie Quersteifigkeit aufweist.

Zur Lösung dieser Aufgabe wird bei einem Hydrolager der eingangs genannten Art vorgeschlagen, dass das erste Lagerkernteil einen konisch ausgebildeten Vorsprung aufweist, der in einen korrespondierenden konischen Durchgang des zweiten Lagerteils hineinragt.

Durch die funktionale Trennung der beiden Elastomerkörperabschnitte kann die Längssteifigkeit des Hydrolagers weitgehend unabhängig von der Quersteifigkeit des Hydrolagers eingestellt werden. Der unter statischer Vorlast rein auf Druck beanspruchte erste Elastomerkörperabschnitt überträgt die statische Lagerlast von dem ersten Lagerkernteil auf das zweite Lagerkernteil. Dies führt dazu, dass sich der zweite Elastomerkörperabschnitt bei einer Druckbeanspruchung nicht setzt. Der zweite Elastomerkörperabschnitt wird unter statischer Vorlast rein auf Schub beansprucht. Bei Querverformung des ersten Lagerkernteils wird eine kardanische Deformation des zweiten Elastomerkörperabschnitts über das erste Lagerkernteil blockiert. Zur Einstellung der Längs- bzw. Quersteifigkeit des Hydrolagers können die Dicken und die Elastizität des ersten und/oder des zweiten Elastomerkörperabschnitts variiert werden. Durch eine derartige Ausgestaltung werden Zugeigenspannungen infolge von Schwund unter Vorlast im Elastomerkörper nicht auftreten, was die Dauerhaltbarkeit erhöht. Durch das kompakte Design des Hydrolagers ist eine einfache Herstellbarkeit gewährleistet.

Vorteilhafte Ausgestaltungen des Hydrolagers sind Gegenstand der abhängigen Ansprüche.

In vorteilhafter Ausgestaltung weist das Hydrolager eine Quersteifigkeit und eine Längssteifigkeit auf, wobei die Quersteifigkeit mindestens 60% der Längssteifigkeit beträgt.

Dadurch, dass der erste Elastomerkörperabschnitt senkrecht zu einer Mittelachse des ersten Lagerkernteils und/oder einer Mittelachse des zweiten Lagerkernteils angeordnet ist und der zweite Elastomerkörperabschnitt längs der Mittelachse des ersten Lagerkernteils und/oder der Mittelachse des zweiten Lagerkernteils angeordnet ist, können kardanische Deformationen des zweiten Elastomerkörperabschnitts über den ersten Elastomerkörperabschnitt blockiert werden. Auf das Hydrolager wirkende Längskräfte werden vom ersten Elastomerkörperabschnitt auf die Tragfeder übertragen. Somit kann ein Setzen des zweiten Elastomerkörperabschnitts in Richtung der Arbeitskammer verhindert werden, welches durch statische, auf Dauer auf das Hydrolager wirkende Längskräfte, die durch das Gewicht des Motors bedingt sind, auf den zweiten Elastomerkörperabschnitt wirken. Dies wirkt sich vorteilhaft sowohl auf die Lebensdauer als auch auf die Funktionalität des zweiten Elastomerkörperabschnitts aus. Weiterhin können Verschleißerscheinungen im zweiten Elastomerkörper aufgrund von Scherkräften verhindert werden.

Dadurch, dass das zweite Lagerkernteil einen Durchgang aufweist, in den das erste Lagerkernteil hineinragt, kann eine kompakte Bauform verwirklicht werden, die in übliche standardisierte Packages passt. So kann das erste Lagerkernteil nur teilweise in den Durchgang des zweiten Lagerkernteils oder vollständig hineinragen.

Das erste Lagerkernteil weist einen konisch ausgebildeten Vorsprung auf, der in einen korrespondierenden konischen Durchgang des zweiten Lagerkernteils hineinragt.

In einer vorteilhaften Ausgestaltung ist der konisch ausgebildete Vorsprung des ersten Lagerkernteils als ein Stiftelement ausgebildet. Vorteilhafterweise weist das Stiftelement einen Befestigungsring auf, der auf dem ersten Elastomerkörperabschnitt aufliegt, um die Aufnahme der statischen Kräfte des Motors auf dem ersten Elastomerkörperabschnitt zu verbessern. Das Stiftelement kann formschlüssig, kraftschlüssig und/oder stoffschlüssig mit dem ersten Lagerkernteil verbunden sein. So kann das erste Lagerkernteil eine Öffnung aufweisen, in welche das Stiftelement eingesetzt wird.

In vorteilhafter Ausgestaltung ist der zweite Elastomerkörperabschnitt konisch ausgebildet und der erste Elastomerkörperabschnitt ringförmig ausgebildet. Durch die konische Ausgestaltung können Zugeigenspannungen infolge von Schwund unter Vorlast nicht auftreten. Dies wirkt sich vorteilhaft auf die Lebensdauer des zweiten Elastomerkörperabschnitts aus. Der zweite Elastomerkörperabschnitt kann den konisch ausgebildeten Vorsprung umgeben, während der zweite Elastomerkörperabschnitt von dem zweiten Lagerkernteil umgeben ist, der im Bereich des zweiten Elastomerkörperabschnitts konisch konturiert ist. Beispielsweise umschließt der zweite Elastomerkörperabschnitt den konisch ausgebildeten Vorsprung des ersten Lagerkernteils im Bereich des zweiten Lagerkernteils vollständig und der zweite Elastomerkörperabschnitt ist vollständig von dem zweiten Lagerkernteil umschlossen. Durch diesen Aufbau kann das Hydrolager eine besonders hohe Quersteifigkeit im Vergleich zu seiner Längssteifigkeit erreichen.

In vorteilhafter Ausgestaltung ist das zweite Lagerkernteil vollständig von dem Elastomerkörper umschlossen.

In vorteilhafter Ausgestaltung ist der Elastomerkörper stoffschlüssig mit der Tragfeder verbunden. Dadurch kann die Tragfeder und der Elastomerkörper in einem Arbeitsschritt und somit besonders kostengünstig hergestellt werden.

In vorteilhafter Ausgestaltung ist die Mittelachse der Arbeitskammer zu der Mittelachse des ersten Lagerkernteils und/oder zur Mittelachse des zweiten Lagerkernteils geneigt.

In vorteilhafter Ausgestaltung weist das Hydrolager eine Schalteinrichtung auf, die einen in die Zwischenplatte eingebrachten Tilgerkanal öffnen oder verschließen kann. Wenn der Tilgerkanal geöffnet ist, kann im Tilgerkanal eine Fluidsäule schwingen, welche die dynamische Federrate des Hydrolagers absenkt. Die Schalteinrichtung kann pneumatischer, magnetischer oder einer ansonsten für den Fachmann übliche Art der Schaltreinrichtung für Hydrolager sein.

Nachfolgend werden das Hydrolager sowie weitere Merkmale und Vorteile anhand eines Ausführungsbeispiels näher erläutert, das in der Figur schematisch dargestellt ist. Hierbei zeigt:

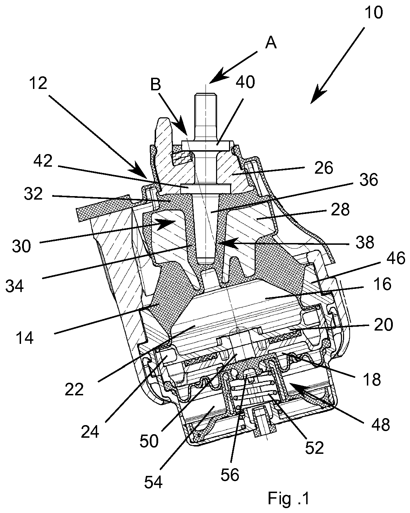

- Fig. 1: einen Querschnitt durch ein Hydrolager.

Das in Fig. 1 dargestellte Hydrolager 10 dient zur Abstützung eines nicht dargestellten Kraftfahrzeugmotors an einer nicht dargestellten Kraftfahrzeugkarosserie.

Das Hydrolager 10 umfasst einen Lagerkern 12, eine Tragfeder 14 aus einem elastomeren Werkstoff, eine Arbeitskammer 16, die von der Tragfeder 14 begrenzt ist, und eine Ausgleichskammer 18, die durch eine Zwischenplatte 20 von der Arbeitskammer 16 getrennt ist. Die Arbeitskammer 16 und die Ausgleichskammer 18 sind mit einem hydraulischen Fluid 22 gefüllt und durch einen in die Zwischenplatte 20 eingebrachten Überströmkanal 24 miteinander verbunden.

Der Lagerkern 12 weist ein erstes Lagerkernteil 26 und ein zweites Lagerkernteil 28 auf, die über einen Elastomerkörper 30 miteinander wirkverbunden sind. Die beiden Lagerkernteile 26, 28 sind aus Metall und mit dem Elastomerkörper 30 stoffschlüssig verbunden.

Das erste Lagerkernteil 26 weist zudem einen konisch ausgebildeten Vorsprung in Form eines Stiftelementes 36 auf, das in einen konischen Durchgang 38 des zweiten Lagerkernteils 28 hineinragt. Das Stiftelement 36 ist mit dem ersten Lagerkernteil 26 über einen ersten Befestigungsring 40 und einen zweiten Befestigungsring 42 verbunden.

Der Elastomerkörper 30 ist mit der Tragfeder 14, insbesondere stoffeinheitlich, verbunden und weist einen ersten Elastomerkörperabschnitt 32 und einen zweiten Elastomerkörperabschnitt 34 auf. Der erste Elastomerkörperabschnitt 32 ist näherungsweise ringförmig ausgebildet und zwischen dem ersten Lagerkernteil 26 und dem zweiten Lagerkernteil 28 angeordnet und dient zur Aufnahme der statischen Last. Der zweite Elastomerkörperabschnitt 34 erstreckt sich senkrecht zu dem ersten Elastomerkörperabschnitt 32 und ist innerhalb des Durchgangs 38 angeordnet. Der zweite Elastomerkörperabschnitt 34 dient zur Einstellung der Längs- und Quersteifigkeit des Hydrolagers 10.

Wie in der Figur zudem ersichtlich ist, ist die Mittelachse B der Arbeitskammer 22 zu der Mittelachse A des ersten Lagerkernteils 26 und/oder zur Mittelachse A des zweiten Lagerkernteils 28 geneigt.

Der unter statischer Vorlast rein auf Druck beanspruchte erste Elastomerkörperabschnitt 32 überträgt die statische Lagerlast von dem ersten Lagerkernteil 26 auf das zweite Lagerkernteil 28, welcher die statisch Lagerlast auf die Tragfeder 14 überträgt. Bei Querverformung des ersten Lagerkernteils 26 wird eine kardanische Deformation des zweiten Elastomerkörperabschnitts 34 über das erste Lagerkernteil 26 blockiert. Der zweite Elastomerkörperabschnitt 34 wird unter statischer Last nur auf Schub beansprucht. Die statische Last wird dazu über das Stiftelement 36 auf den zweiten Elastomerkörperabschnitt 34 übertragen. Zur Einstellung der Längs- bzw. Quersteifigkeit des Hydrolgaers 10 können die Dicken und die Elastizität des ersten und des zweiten Elastomerkörpers 32, 34 variiert werden. Gleichzeitig kann die hochfrequente Schwingungsabkopplung des Hydrolagers durch die doppelte Isolierung des zweiten Lagerkernteils 28 über den Elastomerkörper 30 und die Tragfeder 14 realisiert werden.

Das Hydrolager 10 weist zudem eine pneumatische Schalteinrichtung 48 auf, mittels der ein in die Zwischenplatte 20 eingebrachter Tilgerkanal 50 schaltbar ist. Die Schalteinrichtung 48 umfasst eine Druckfeder 52, eine Unterdruckkammer 54 und einen Stopfen 56 zum Verschließen des Tilgerkanals 50. Bei Anlegen eines Unterdrucks in der Unterdruckkammer 54 wird die spiralförmige Druckfeder 52 zusammengedrückt und der Stopfen 56 gibt den Tilgerkanal 50 frei. Dann kann dort eine Fluidsäule schwingen und die dynamische Federrate des Hydrolagers 10 absenken. Die Schalteinrichtung 48 kann auch eine magnetische oder eine ansonsten für den Fachmann übliche Art der Schalteinrichtung für Hydrolager sein.

### Bezugszeichen

- 10: Hydrolager
- 12: Lagerkern
- 14: Tragfeder
- 16: Arbeitskammer
- 18: Ausgleichskammer
- 20: Zwischenplatte
- 22: Fluid
- 24: Überströmkanal
- 26: erstes Lagerkernteil
- 28: zweites Lagerkernteil
- 30: Elastomerkörper
- 32: erster Elastomerkörperabschnitt
- 34: zweiter Elastomerkörperabschnitt
- 36: Stiftelement
- 38: Durchgang
- 40: erster Befestigungsring
- 42: zweiter Befestigungsring
- 46: Traglager
- 48: Schalteinrichtung
- 50: Tilgerkanal
- 52: Druckfeder
- 54: Unterdruckkammer
- 56: Stopfen
- A: Mittelachse des ersten Lagerkernteils/ zweiten Lagerkernteils
- B: Mittelachse der Arbeitskammer

## Patentansprüche

1. Hydrolager (10), insbesondere zur Lagerung eines Kraftfahrzeugmotors, mit einem Lagerkern (12), einer Tragfeder (14) aus einem elastomeren Werkstoff, einer Arbeitskammer (16), die von der Tragfeder (14) begrenzt ist, und einer Ausgleichskammer (18), die durch eine Zwischenplatte (20) von der Arbeitskammer (16) getrennt ist, wobei die Arbeitskammer (16) und die Ausgleichskammer (18) mit hydraulischem Fluid (22) gefüllt und durch einen Überströmkanal (24) miteinander verbunden sind, wobei der Lagerkern (12) ein erstes Lagerkernteil (26) und ein zweites Lagerkernteil (28) aufweist, die über einen Elastomerkörper (30) zur hochfrequenten Schwingungsentkopplung miteinander wirkverbunden sind, wobei der Elastomerkörper (30) einen ersten Elastomerkörperabschnitt (32), der wenigstens eine auf den Lagerkern (12) wirkende statische Lagerlast aufnimmt, und einen zweiten Elastomerkörperabschnitt (34) aufweist, der wenigstens eine auf den Lagerkern (12) wirkende Querkraft aufnimmt, wobei der erste Elastomerkörperabschnitt (32) senkrecht zu einer Mittelachse (A) des ersten Lagerkernteils (26) und/oder einer Mittelachse (A) des zweiten Lagerkernteils (28) angeordnet ist und der zweite Elastomerkörperabschnitt (34) längs der Mittelachse (A) des ersten Lagerkernteils (26) und/oder der Mittelachse (A) des zweiten Lagerkernteils (28) angeordnet ist, **dadurch gekennzeichnet, dass** das erste Lagerkernteil (26) einen konisch ausgebildeten Vorsprung aufweist, der in einen korrespondierenden konischen Durchgang (38) des zweiten Lagerteils (28) hineinragt.

2. Hydrolager (10) nach Anspruch 1, **dadurch gekennzeichnet, dass** das Hydrolager (10) eine Quersteifigkeit und eine Längssteifigkeit aufweist, wobei die Quersteifigkeit mindestens 60% der Längssteifigkeit beträgt.

3. Hydrolager (10) nacheinem der vorhergehenden Ansprüche, **dadurch gekennzeichnet, dass** der konisch ausgebildete Vorsprung des ersten Lagerkernteils (26) als ein Stiftelement (36) ausgebildet ist.

4. Hydrolager (10) nach einem der vorhergehenden Ansprüche, **dadurch gekennzeichnet, dass** der zweite Elastomerkörperabschnitt (34) konisch verlaufend ausgebildet ist und dass der erste Elastomerkörperabschnitt (32) ringförmig ausgebildet ist.

5. Hydrolager (10) nach einem der vorhergehenden Ansprüche, **dadurch gekennzeichnet, dass** der zweite Lagerkernteil (28) vollständig von dem Elastomerkörper (30) umschlossen ist.

6. Hydrolager (10) nach einem der vorhergehenden Ansprüche, **dadurch gekennzeichnet, dass** der Elastomerkörper (30) stoffschlüssig mit der Tragfeder (14) verbunden ist.

7. Hydrolager (10) nach einem der vorhergehenden Ansprüche, **dadurch gekennzeichnet, dass** die Mittelachse (B) der Arbeitskammer (16) zur Mittelachse (A) des ersten Lagerkernteils (26) und/oder zur Mittelachse (A) des zweiten Lagerkernteils (28) geneigt ist.

8. Hydrolager (10) nach einem der vorhergehenden Ansprüche, **dadurch gekennzeichnet, dass** das Hydrolager (10) ein schaltbares Hydrolager (10) ist.

## Claims

1. Hydromount (10), in particular for mounting a motor vehicle engine, with a mount core (12), a support spring (14) made of an elastomeric material, a working chamber (16) which is delimited by the support spring (14), and a compensation chamber (18) which is separated from the working chamber (16) by an intermediate plate (20), wherein the working chamber (16) and the compensation chamber (18) are filled with hydraulic fluid (22) and connected to each other by an overflow channel (24), wherein the mount core (12) comprises a first mount core part (26) and a second mount core part (28) which are operatively connected to each other via an elastomer body (30) for highfrequency vibration decoupling, wherein the elastomer body (30) has a first elastomer body portion (32), which absorbs at least one static mount load acting on the mount core (12), and has a second elastomer body portion (34) which absorbs at least one transverse force acting on the mount core (12), wherein the first elastomer body portion (32) is arranged perpendicular to a centre axis (A) of the first mount core part (26) and/or a centre axis (A) of the second mount core part (28), and the second elastomer body portion (34) is arranged along the centre axis (A) of the first mount core part (26) and/or the centre axis (A) of the second mount core part (28), **characterised in that** the first mount core part (26) has a conically shaped projection which protrudes into a corresponding conical passage (38) of the second mount part (28).

2. Hydromount (10) according to claim 1, **characterised in that** the hydromount (10) has a transverse stiffness and a longitudinal stiffness, wherein the transverse stiffness is at least 60% of the longitudinal stiffness.

3. Hydromount (10) according to any one of the preceding claims, **characterised in that** the conically shaped projection of the first mount core part (26) is designed as a pin element (36).

4. Hydromount (10) according to any of the preceding claims, **characterised in that** the second elastomer body portion (34) is tapered and **in that** the first elastomer body portion (32) is annular.

5. Hydromount (10) according to any one of the preceding claims, **characterised in that** the second mount core part (28) is completely enclosed by the elastomer body (30).

6. Hydromount (10) according to any one of the preceding claims, **characterised in that** the elastomer body (30) is connected to the support spring (14) in a substance-to-substance bond.

7. Hydromount (10) according to one of the preceding claims, **characterised in that** the centre axis (B) of the working chamber (16) is inclined towards the centre axis (A) of the first mount core part (26) and/or towards the centre axis (A) of the second mount core part (28).

8. Hydromount (10) according to any one of the preceding claims, **characterised in that** the hydromount (10) is a switchable hydromount (10).

## Revendications

1. Support hydraulique (10), en particulier pour monter un moteur de véhicule automobile, comportant un noyau de support (12), un ressort porteur (14) en un matériau élastomère, une chambre de travail (16) délimitée par le ressort porteur (14), et une chambre de compensation (18) séparée de la chambre de travail (16) par une plaque intermédiaire (20), dans lequel
la chambre de travail (16) et la chambre de compensation (18) sont remplies d'un fluide hydraulique (22) et sont reliées l'une à l'autre par un canal de déversement (24),
le noyau de support (12) comprend une première partie de noyau (26) et une seconde partie de noyau (28) qui sont reliées en action l'une à l'autre par un corps élastomère (30) pour le découplage d'oscillations à haute fréquence,
le corps élastomère (30) comprend une première portion de corps élastomère (32) encaissant au moins une charge de support statique agissant sur le noyau de support (12), et une seconde portion de corps élastomère (34) encaissant au moins une force transversale agissant sur le noyau de support (12),
la première portion de corps élastomère (32) est disposée perpendiculairement à un axe médian (A) de la première partie de noyau (26) et/ou à un axe médian (A) de la seconde partie de noyau (28), et la seconde portion de corps élastomère (34) est disposée le long de l'axe médian (A) de la première partie de noyau (26) et/ou de l'axe médian (A) de la seconde partie de noyau (28),
**caractérisé en ce que**
la première partie de noyau (26) présente une saillie réalisée de façon conique qui pénètre dans un passage conique correspondant (38) de la seconde partie de noyau (28).

2. Support hydraulique (10) selon la revendication 1,
**caractérisé en ce que**
le support hydraulique (10) présente une rigidité transversale et une rigidité longitudinale, la rigidité transversale étant d'au moins 60 % de la rigidité longitudinale.

3. Support hydraulique (10) selon l'une des revendications précédentes,
**caractérisé en ce que**
la saillie réalisée conique de la première partie de noyau (26) est réalisée sous la forme d'un élément de tige (36).

4. Support hydraulique (10) selon l'une des revendications précédentes,
**caractérisé en ce que**
la seconde portion de corps élastomère (34) est réalisée de manière à s'étendre coniquement, et **en ce que**
la première portion de corps élastomère (32) est réalisée en forme annulaire.

5. Support hydraulique (10) selon l'une des revendications précédentes,
**caractérisé en ce que**
la seconde partie de noyau (28) est complètement entourée par le corps élastomère (30).

6. Support hydraulique (10) selon l'une des revendications précédentes,
**caractérisé en ce que**
le corps élastomère (30) est relié par coopération de matière au ressort porteur (14).

7. Support hydraulique (10) selon l'une des revendications précédentes,
**caractérisé en ce que**
l'axe médian (B) de la chambre de travail (16) est incliné par rapport à l'axe médian (A) de la première partie de noyau (26) et/ou par rapport à l'axe médian (A) de la seconde partie de noyau (28).

8. Support hydraulique (10) selon l'une des revendications précédentes,
**caractérisé en ce que**
le support hydraulique (10) est un support hydraulique commutable (10).
